# EUROPÄISCHE PATENTANMELDUNG

(11) **EP 2 602 385 A1**
(43) Veröffentlichungstag der Anmeldung: **12.06.2013**
(21) Anmeldenummer: 11009681.5
(22) Anmeldetag: 08.12.2011
(51) Int. Cl.: D06N 7/00, B32B 27/12, B32B 27/40, B32B 37/00, B32B 37/15

(54) **Flächiges Textilsubstrat enthaltend Glasfasern, Verfahren zu dessen Herstellung und dessen Verwendung**

(30) Priorität: 07.12.2011 US 201161567776 P
(71) Anmelder: VITRULAN Textile Glass GmbH, 95509 Marktschorgast (DE)
(72) Erfinder: Zettl, Heiko, Dr., 95448 Bayreuth (DE); Zapf, Gunnar, 95369 Untersteinach (DE)
(74) Vertreter: Riepe, Hans-Gerd

(57) **Zusammenfassung**

Die Erfindung bezieht sich auf ein flächiges Textilsubstrat enthaltend Glasfasern mit modifizierter Oberfläche, wobei das Textilsubstrat zumindest bereichsweise eine Beschichtung mit einem Schmelzklebstoff aufweist. Hierdurch kann eine Erhöhung der Oberflächengüte des Textilsubstrates erreicht werden. Ebenso bezieht sich die Erfindung auf ein Verfahren zur Herstellung flächiger Textilsubstrate. Verwendung finden die flächigen Textilsubstrate in Form von Tapeten, dekorativen Wand- und Deckenbelägen, armierende Wand-, Dach-, Decken- und Bodenbeläge im Innen- und Außenbereich, für die dekorative Wand- und Deckenverkleidungen sowie für dekorative Tür- und Möbelverkleidungen.

## Beschreibung

Die Erfindung bezieht sich auf ein flächiges Textilsubstrat enthaltend Glasfasern mit modifizierter Oberfläche, wobei das Textilsubstrat zumindest bereichsweise eine Beschichtung mit einem Schmelzklebstoff aufweist. Hierdurch kann eine Erhöhung der Oberflächengüte des Textilsubstrates erreicht werden. Ebenso bezieht sich die Erfindung auf ein Verfahren zur Herstellung flächiger Textilsubstrate. Verwendung finden die flächigen Textilsubstrate in Form von Tapeten, dekorativen Wand- und Deckenbelägen, armierende Wand-, Dach-, Decken- und Bodenbeläge im Innen- und Außenbereich, für die dekorative Wand- und Deckenverkleidungen sowie für dekorative Tür- und Möbelverkleidungen.

Die Beschichtung von flächigen Textilsubstraten enthaltend zugleich Glasfasern beruht in der Regel darauf, diese mit wässrigen Kunststoffdispersionen, z.B. aus Styrol-Butadien-Copolymeren, Styrol-Acrylat-Copolymeren, Ethylen-Vinylacetat-Copolymeren (EVA), Acrylat-Vinylacetat- oder Ethylenchlorid- Polymeren, zu imprägnieren. Durch das Verdampfen des Wassers nach der Tauchbeschichtung bildet sich ein Film, welcher in der Hitze nach dem vollständigen Entweichen des Wassers vernetzt. Derartige Verfahren sind bspw. aus DE 41 38 717 A1 bekannt. Sie bringen jedoch den Nachteil mit sich, dass sie sehr energieintensiv sind und keinen vollständigen Schutz gegen den Angriff alkalischer Medien ermöglichen.

Weiterhin ist aus der DE 10 2006 007 555 A1 ein Verfahren zum flächigen Auftragen Klebstofffilmen auf flächigen Substraten bekannt, bei dem ein Klebstoffauftragsystem mit einer Schlitzdüse zum Auftragen eines Klebstofffilms mit vorgegebener Breite und Dicke eingesetzt wird.

Der Erfindung liegt daher die Aufgabe zugrunde, eine Modifizierung der Oberfläche von Glasfasern enthaltenden Textilsubstraten bereitzustellen, wobei durch die Modifizierung eine verbesserte Oberflächengüte, z.B. in Form einer geringeren Oberflächenrauigkeit, einer verbesserten Abrieb- und Scheuerfestigkeit, einer geringeren Wasserdampfdurchlässigkeit oder in Form von verbesserten elektrostatischen Eigenschaften.

Dieser Aufgabe wird durch das flächige Textilsubstrat mit den Merkmalen des Anspruches 1 und das Verfahren zu dessen Herstellung mit den Merkmalen des Anspruches 14 gelöst. In Anspruch 17 werden erfindungsgemäße Verwendungen angegeben.

Erfindungsgemäß wird ein flächiges Textilsubstrat enthaltend Glasfasern mit modifizierter Oberfläche bereitgestellt, wobei das Textilsubstrat zumindest bereichsweise eine einen Schmelzklebstoff enthaltende Beschichtung zur Erhöhung der Oberflächengüte aufweist.

Vorzugsweise ist das Textilsubstrat ausgewählt aus der Gruppe bestehend aus Gewebe, Vliese, Gestricke, Gewirke, Gelege oder Kombinationen hiervon.

Es ist weiterhin bevorzugt, dass das Textilsubstrat eine Mischtextilie ist, die Glasfasern und Fasern ausgewählt aus der Gruppe bestehend aus
- Mineralfasern,
- Carbonfasern,
- Synthetische Fasern, insbesondere Polymerfasern, bevorzugt aus Polyestern, Polyamiden und Polyurethanen
- Viskosefasern, Zellstofffasern
- Naturfasern, insbesondere Baumwolle, Wolle, Kapok, Hanf, Leinen, Jute,
- Metallfäden sowie
- Mischungen hiervon
enthält.

Eine weitere bevorzugte Ausführungsform sieht vor, dass der Schmelzklebstoff ausgewählt ist aus der Gruppe bestehend aus
- thermoplastischen Elastomeren, insbesondere aus der Gruppe der Polykondensationsprodukte bestehend aus Polyestern, Polyamiden und Copolyamidelastomeren,
- Polyadditionsprodukte, insbesondere aus der Gruppe bestehend aus Polyurethan und Epoxidharzen,
- Polyolefine, insbesondere aus der Gruppe bestehend aus Polyethylen, Polypropylen, amorphe Polyalphaolefine,
- Ethylenvinylacetat-Copolymere,
- Vinylpyrrolidon/Vinylacetat-Copolymere (wasserlöslich)
- Vinylpyrrolidon/Vinylcaprolactam-Copolymere sowie
- Copolymere oder Blends der genannten Homopolymere.

Vorzugsweise enthält der Schmelzklebstoff weitere Hilfsstoffe ausgewählt aus der Gruppe bestehend aus
- Füllstoffe, insbesondere Calciumcarbonate, Kaoline, Aluminiumhydroxide, Magnesiumhydroxide, Glashohlkugeln, Glaskugeln, Polymerkugeln, Keramikkugeln oder Quarzmehle,
- Pigmente, insbesondere anorganische Pigmente auf Basis Titandioxid, Eisenoxiden, Aluminiumoxiden, Aluminiumsilikaten, Chromoxiden, Zirkoniumoxiden, Bismutvanadaten und komplexe anorganische Buntpigmente oder organische Pigmente auf Basis von Azopigmenten, Kupferphtalocyanin Pigmenten, Chinacridon Pigmenten, Perylen Pigmenten,
- UV-Schutzadditiven, Fungiziden, (nanopartikuläres) Silber, Vernetzer, Flammschutzmittel, Cyclodextrine, Carbonnanotubes, Hydrophobierungsmitteln sowie
- Mischungen hiervon.

Der Schmelzklebstoff ist vorzugsweise frei von Flammschutzmitteln. Hierbei ist besonders überraschend, dass dennoch gängige Flammschutztests durch das erfindungsgemäße Textilsubstrat bestanden werden.

Es ist bevorzugt, dass die Beschichtung eine Schichtdicke von 0,5 µm bis 2 mm, bevorzugt von 5 µm bis 500 µm und besonders bevorzugt von 10 µm bis 50 µm aufweist.

Weiter ist bevorzugt, dass die Auftragsmenge des Schmelzklebstoffs von 1 bis 100 g/m², insbesondere von 5 bis 30 g/m² beträgt.

Vorzugsweise weist das beschichtete Textilsubstrat mindestens eine der folgenden Eigenschaften auf:
- eine Abrieb- und Scheuerfestigkeit im Bereich von 10 bis 2000, insbesondere von 100 bis 1000 Touren (getestet mit Martin-Dale-Abrieb mit Schleifpapier Körnung 400)
- eine Wasserdampfdurchlässigkeit mit einer Dampfdiffusionswiderstandszahl von µ ≤ 10 (sehr gut wasserdampfdurchlässig) bis zu Dampfsperren mit einer Dampfdiffusionswiderstandszahl größer 15000
- elektrostatischen Eigenschaften einstellbar von antistatischen Eigenschaften mit einem Oberflächenwiderstand im Bereich 10² bis 10E9 Ohm, bzw. mit isolierenden Eigenschaften mit einem Oberflächenwiderstand im Bereich 10E9 bis 10E12 Ohm.

Es ist bevorzugt, dass über die Art des Schmelzklebstoffs und die Dicke der Beschichtung eine Barrierefunktion des Textilsubstrats gegenüber Wasserdampf einstellbar ist.

In einer bevorzugten Ausführungsform kann der Schmelzklebstoff auch zur Dekorierung als strukturierte Schicht, insbesondere in Form von Streifen, aufgetragen sein.

Für den Fall, dass das Textilsubstrat ein Farbanstrich aufweist, konnte überraschenderweise festgestellt werden, dass im Vergleich zu einer handelsüblichen, mit einer Stärke-Kunststoff-Appretur beschichteten Glastapete, bzw. einem handelsüblichen rohweisen Malervlies, beim Farbanstrich 20 bis 80% weniger, insbesondere 40 bis 60% weniger Farbe für einen deckenden Anstrich benötigt wird.

Das Textilsubstrat kann mit einer Vielzahl weiterer funktionaler Elemente verbunden sein. Die funktionalen Elemente sind dabei vorzugsweise ausgewählt aus der Gruppe bestehend aus Akustikvlies, Schaumstoff, Wärmedämmmsystem, Wärmespeichersystem, wasserabsorbierendes System, Flächenheizung, Ausgleichsschicht, IR-reflektierende Schicht, Geruchsabsorbierende Schicht, paramagnetisches System oder Kombinationen hiervon angeordnet sind.

Erfindungsgemäß wird ebenso ein Verfahren zur Herstellung eines Textilsubstrates mit einer Schmelzklebstoffschicht, so wie es zuvor beschrieben wurde, bereitgestellt. Dieses basiert auf folgenden Schritten:
a) mindestens ein reaktiver Schmelzklebstoff wird mittels einer Schlitzdüse auf mindestens einer Oberfläche des Textilsubstrats aufgetragen und
b) das Textilsubstrat über eine anti-haft beschichtete Walze zur Entfernung von Luftblasen aus dem Verbund aus Textilsubstrat und Schmelzklebstoff geführt wird.

Es ist bevorzugt, dass nach Schritt b), z.B. mittels eines Kalanders, eine Druckbeaufschlagung zur Verbesserung der Haftung zwischen Textilsubstrat und Schmelzklebstoffschicht erfolgt.

Es ist weiter bevorzugt, dass die Textilsubstratbahn mit einer Geschwindigkeit im Bereich von 1 bis 500 m/min, insbesondere von 10 bis 100 m/min transportiert wird.

Das erfindungsgemäße Textilsubstrat kann als Tapete, für dekorative Wand- und Deckenbeläge, für armierende Wände, Decken- und Bodenbeläge im Innen- und Aussenbereich, für dekorative Wand- und Deckenverkleidungen, für dekorative Tür- und Möbelverkleidungen eingesetzt werden. Hierbei können diese einen Farbanstrich aufweisen oder auch frei von einem Farbanstrich sein.

Anhand der nachfolgenden Beispiele soll der erfindungsgemäße Gegenstand näher erläutert werden, ohne diese auf die hier gezeigten spezifischen Ausführungsformen einschränken zu wollen.

### Allgemeines zur Prozessführung:

Die verwendete Auftragstechnik ist eine Weiterentwicklung einer Breitschlitzdüse, bei der eine genaue Dosierung des Klebstoffs möglich ist. Bei dieser Technik wird über eine modular aufgebaute Breitschlitzdüse ein Klebstofffilm gebildet, der ohne Kontakt zwischen Düse und Substrat auf dem Substrat abgelegt wird.

Die Breitschlitzdüse besteht aus einem 300 µm Spalt, der bei der verwendeten Anlage, über 16 einzeln versorgte Düsen beschickt wird. Durch die Segmentierung der Spaltbeschickung ist ein konstanter Mengenstrom von Klebstoff auch bei großen Beschichtungsbreiten möglich. Die einzelnen Düsensegmente werden durch gleichlaufende Zahnradpumpen versorgt, wodurch ein identischer Volumenstrom für alle Segmente gewährleistet ist. Die Breite der Düse wird durch die Anzahl der verwendeten Segmente festgelegt. Bei breiten Düsen kann durch einen Schieber ein Teil der Segmente abgeschaltet werden. Dadurch ist auch bei breiten Düsen ein Auftrag auf schmale Substrate möglich.

Die einzelnen Düsen werden durch ein Ventil zwischen dem Auftragsmodus und dem Zirkulationsmodus umgeschaltet. Durch die Zirkulation des Klebstoffs zwischen Düse und Vorratsbehälter während der Phasen, in denen kein Auftrag erfolgt wird vermieden, dass es in der Düse und den Schläuchen zu Ablagerungen, bzw. zum Ausreagieren des Klebstoffs kommt. Des Weiteren bauen sich durch die Zirkulation des Klebstoffs keine Druckspitzen vor der Düse auf und es wird eine unkontrollierte Abgabe von Kleber beim Öffnen der Ventile vermieden.

Durch die Zirkulation des Klebstoffs in der Anlage wird der Reinigungsaufwand der Anlage reduziert. Eine Reinigung der Anlage mit Polyurethan (PU)-Reiniger soll explizit vermieden werden. PU-Reiniger basieren auf Alkoholen, die eine hydrolytische Spaltung der PU's bewirken. Bereits sehr geringe Mengen von 1 % bewirken eine starke Eigenschaftsveränderung des Klebers. Daher muss nach einer Reinigung mit sehr viel Klebstoff nachgespült werden, um eine Kontamination des Klebers zu vermeiden.

Die Dicke des abgelegten Klebstofffilms wird über die Verstreckung des Films im Spalt zwischen Düse und Substrat festgelegt. Bei den verwendeten Klebstoffen ist eine Verstreckung des 300 µm dicken Ausgangsfilms auf ca. 5 µm problemlos möglich.

Nach dem Ablegen des Films auf dem Substrat wird der Verbund über eine anti-haftend beschichtete Walze geführt, die dazu dient, eventuell vorhandene Luftblasen aus dem Verbund zu entfernen. Die Beschichtung der Walze muss auf den jeweiligen Kleber und das entsprechende Substrat abgestimmt werden. Die Walze kann bei Bedarf auch temperiert werden. Die Walze muss ca. alle 6 Monate ausgetauscht und neu beschichtet werden. Die Beschichtungen der Walze können auch profiliert ausgeführt werden (Einstellung verschiedener Rauhigkeiten) zur Erzielung gewünschter Oberflächeneffekte.

Neben der Walze unterliegen auch die beheizten Schläuche, die zwischen Düsenkopf und Vorratsbehälter verlaufen einem Verschleiß. Zur Reduzierung der Unterhaltskosten einer solchen Anlage wurden die Schläuche modular ausgeführt und es muss nur die innere Seele bei Verschmutzung ausgetauscht werden.

Auf der Versuchsanlage ist nach dem Auftragswerk ein zusätzlicher Kalander angebracht. Dessen Walzen können temperiert werden und bei Bedarf beschichtet werden. Durch diesen Kalander kann nochmals Druck auf den Verbund ausgeübt werden und die Haftung und Oberflächenbeschaffenheit des Verbunds optimiert werden. Die Beschickung der Düse mit Kleber kann über verschiedene Module erfolgen. Für kleine zu verarbeitende Mengen werden Beutelschmelzer eingesetzt, in denen Kleberbeutel mit einem Fassungsvermögen von 17 kg eingesetzt werden. Werden größere Mengen verarbeitet sind Fassschmelzer vorzuziehen. In diesen können 200 kg Fässer eingesetzt werden, die einen Zwischenpuffer beschicken und so einen kontinuierlichen Betrieb sicherstellen. Die Anzahl der eingesetzten Fassschmelzer hängt von der benötigten Klebermenge ab.

Bei dem angestrebten Ziel einer Auftragsmenge von 10 - 15 g/m² und einer Anlagengeschwindigkeit von 100 m/min entsteht ein Bedarf von 180 kg Kleber pro Stunde. Für diesen Bedarf empfiehlt sich der Einsatz von 3 Fassschmelzern, um die Wechselhäufigkeit der Fässer in einem vertretbaren Rahmen zu halten. Die Anlage steuert dann selbstständig ein unterschiedliches Abschmelzen der Fässer, um einen gleichzeitig notwendigen Austausch mehrerer Fässer zu vermeiden.

### Beispiel

### Informationen zum Klebstoff:

Als Klebstoff wurde der Klebstoff VP 9542/85 eingesetzt.

Der Klebstoff ist ein reaktiver PU-Klebstoff, der über ungeschützte Isocyanatgruppen abreagiert. Bei Zutritt von Luftsauerstoff wird ein Teil der Isocyanatgruppen in Aminogruppen umgewandelt. Diese reagieren mit noch vorhandenen Isocyanatgruppen unter Bildung einer Harnstoffbindung. Dieser Prozess wird rein über den Feuchtigkeitsgehalt der Luft gesteuert. Bei normaler Raumfeuchte dauert die komplette Ausvernetzung des Klebstoffs 3 Tage. Die Anfangsfestigkeit wird jedoch schon nach wenigen Sekunden erreicht, so dass die weitere Verarbeitung des beschichteten Gewebes (v.a. blockfreies Aufwickeln) möglich ist.

Die Auftragung erfolgte auf veschiedenen Gewebetypen.

### Rohweißes Malervlies

Bei dem Vlies handelt es sich um ein rohweißes Malervlies aus Glasfasern mit einem Basisgewicht von 35g/m².

Es erfolgte ein Auftrag von 15 g/m² Klebstoff. Bei dem ersten Versuch haftete der Klebstoff stärker an der Walze als auf dem Substrat. Eine Beschichtung war nicht möglich. Für die nächsten Beschichtungen wurde die Walze gegen eine mit Wasser kühlbare Walze ausgetauscht.

Ziel des Auftrags waren 11 g/m² bei einer Bahngeschwindigkeit von 20 m/min. Die Bahngeschwindigkeit konnte problemlos erreicht werden. Vom Vlies abstehende Einzelfasern führten immer wieder zu Störungen im Beschichtungsfilm. Ein Wiegen der Muster ergab eine Auftragsmenge von 12 g/m². Das Rohmaterial hatte ein Basisgewicht von 35 g/m².

### Offenes Gewebe 1

Beim offenen Gewebe handelt es sich um ein weniger dicht geschlagenes Gewebe mit 32 Kett- und 28 Schussfäden, das einseitig mit einer Appretur beschichtet ist.

Das Basisgewebe hat ein Rohgewicht von 120 g/m². Es wurde mit einer Einstellung für 12 g/m² Kleberauftrag bei 20 m/min gefahren. Eine Messung ergab ein Auftragsgewicht von 19 g/m².

Zur besseren Strukturerhaltung wurde auch bei diesem Gewebetyp die Warenbahn auf ca. 50°C erwärmt und der Anpressdruck auf 7 bar erhöht. Der Auftrag von 12 g/m² Kleber zeigte ein gutes Strukturbild.

### Dicht geschlagenes Gewebe

Beim Gewebe handelt es sich um ein einseitig beschichtetes, dicht geschlagenes Gewebe mit 81 Kett- und 50 Schussfäden.

Das Basisgewebe hat ein Rohgewicht von 173 g/m². Das Gewebe wurde mit einer Einstellung von 12 g/m² und einer Geschwindigkeit von 20 m/min gefahren. Es wurde ein Auftrag von 11 g/m² erreicht, der einen guten optischen Eindruck machte.

Zur Verbesserung des Strukturbildes wurde auch bei dieser Ware der IR-Strahler (3x600 Watt) und der Anpressdruck von 7 bar eingesetzt. Unter diesen Bedingungen zeigte sich ein deutlich besseres Strukturbild.

### Offenes Gewebe 2

Beim diesem offenen Gewebe handelt es sich um ein weniger dicht geschlagenes Gewebe mit 34 Kett- und 24 Schussfäden, das einseitig beschichtet ist.

Das Basisgewebe hat ein Rohgewicht von 116 g/m². Das Gewebe wurde mit einer Einstellung von 12 g/m² und einer Geschwindigkeit von 20 m/min gefahren. Es wurde ein Auftrag von 13 g/m² erreicht, der einen guten optischen Eindruck machte. Die sehr offenen Bereiche des Gewebes werden sehr gut überspannt. Der Film liegt jedoch sehr stark auf der Oberfläche und dringt nur wenig in die Vertiefungen ein.

Für ein besseres Eindringen des Films in die Vertiefungen des Gewebes wurde auch bei dieser Ware der IR-Strahler (3x600 Watt) und der Anpressdruck von 7 bar eingesetzt. Der Auftrag betrug am Beginn des Versuchs 12 g/m² und reduzierte sich auf 10 g/m². Bei diesem Versuch kam es zu einem Filmabriss.

### Rohgewebe, dicht geschlagen mit 81 Kett- und 50 Schussfäden

Das Basisgewebe hat ein Rohgewicht von 155 g/m². Das Gewebe wurde mit einer Einstellung von 15 g/m² und einer Geschwindigkeit von 25 m/min gefahren. Es wurde ein Auftrag von 12 g/m² erreicht, der einen guten optischen Eindruck machte.

In einem zweiten Schritt wurde durch Zuschaltung der Vorheizung eine Reduktion der Auflage auf 10g/m² erzielt, wobei auch hier ein gleichmäßiger, geschlossener Film erreicht wurde.

### Fazit:

Der Klebstoff VP 9542/85 ließ sich auf allen getesteten Gewebetypen sehr gut verarbeiten. Er konnte ohne größere Probleme aufgewickelt werden und bildete in der Anlage einen gleichmäßigen und gut abzulegenden Vorhang. Der Kleber konnte auch ohne Probleme auf verschiedene vorgegebene Gewichte verstreckt werden. Die Polyurethan-Schichten zeigen alle einen deutlich erhöhten Glanzgrad. Beim späteren Abwickeln der Rollen zeigte sich eine leichte Blockneigung des Klebers, die bei der weiteren Entwicklung noch zu verbessern ist.

## Patentansprüche

1. Flächiges Textilsubstrat enthaltend Glasfasern mit modifizierter Oberfläche, wobei das Textilsubstrat zumindest bereichsweise eine einen Schmelzklebstoff enthaltende Beschichtung zur Erhöhung der Oberflächengüte aufweist.

2. Textilsubstrat nach Anspruch 1,
**dadurch gekennzeichnet, dass** das Textilsubstrat ausgewählt ist aus der Gruppe bestehend aus Gewebe, Vliese, Gestricke, Gewirke, Gelege oder Kombinationen hiervon.

3. Textilsubstrat nach einem der Ansprüche 1 bis 2, **dadurch gekennzeichnet, dass** das Textilsubstrat eine Mischtextilie enthaltend Glasfasern und Fasern ausgewählt aus der Gruppe bestehend aus
• Mineralfasern,
• Carbonfasern,
• Synthetische Fasern, insbesondere Polymerfasern, bevorzugt aus Polyestern, Polyamiden und Polyurethanen
• Viskosefasern, Zellstofffasern
• Naturfasern, insbesondere Baumwolle, Wolle, Kapok, Hanf, Leinen, Jute,
• Metallfäden sowie
• Mischungen hiervon.

4. Textilsubstrat nach einem der Ansprüche 1 bis 3, **dadurch gekennzeichnet, dass** der Schmelzklebstoff ausgewählt ist aus der Gruppe bestehend aus
• thermoplastischen Elastomeren, insbesondere aus der Gruppe der Polykondensationsprodukte bestehend aus Polyestern, Polyamiden und Copolyamidelastomeren,
• Polyadditionsprodukte, insbesondere aus der Gruppe bestehend aus Polyurethan und Epoxidharzen,
• Polyolefine, insbesondere aus der Gruppe bestehend aus Polyethylen, Polypropylen, amorphe Polyalphaolefine,
• Ethylenvinylacetat-Copolymere,
• Vinylpyrrolidon/Vinylacetat-Copolymere (wasserlöslich)
• Vinylpyrrolidon/Vinylcaprolactam-Copolymere sowie
• Copolymere oder Blends der genannten Homopolymere.

5. Textilsubstrat nach einem der Ansprüche 1 bis 4, **dadurch gekennzeichnet, dass** der Schmelzklebstoff weitere Hilfsstoffe enthält ausgewählt aus der Gruppe bestehend aus
• Füllstoffe, insbesondere Calciumcarbonate, Kaoline, Aluminiumhydroxide, Magnesiumhydroxide, Glashohlkugeln, Glaskugeln, Polymerkugeln, Keramikkugeln oder Quarzmehle,
• Pigmente, insbesondere anorganische Pigmente auf Basis Titandioxid, Eisenoxiden, Aluminiumoxiden, Aluminiumsilikaten, Chromoxiden, Zirkoniumoxiden, Bismutvanadaten und komplexe anorganische Buntpigmente oder organische Pigmente auf Basis von Azopigmenten, Kupferphtalocyanin Pigmenten, Chinacridon Pigmenten, Perylen Pigmenten,
• UV-Schutzadditiven, Fungiziden, nanopartikuläres Silber, Vernetzer, Flammschutzmittel, Cyclodextrine, Carbonnanotubes sowie
• Mischungen hiervon.

6. Textilsubstrat nach einem der Ansprüche 1 bis 5, **dadurch gekennzeichnet, dass** der Schmelzklebstoff frei von Flammschutzmitteln ist.

7. Textilsubstrat nach einem der Ansprüche 1 bis 6, **dadurch gekennzeichnet, dass** die Beschichtung eine Schichtdicke von 0,5 µm bis 2 mm, bevorzugt von 5 µm bis 500 µm und besonders bevorzugt von 10 µm bis 50 µm aufweist.

8. Textilsubstrat nach einem der Ansprüche 1 bis 7, **dadurch gekennzeichnet, dass** die Auftragsmenge des Schmelzklebstoffs von 1 bis 100 g/m², insbesondere von 5 bis 30 g/m² beträgt.

9. Textilsubstrat nach einem der Ansprüche 1 bis 8, **dadurch gekennzeichnet, dass** das beschichtete Textilsubstrat mindestens eine der folgenden Eigenschaften aufweist:
• eine Abrieb- und Scheuerfestigkeit im Bereich von 10 bis 2000, insbesondere von 100 bis 1000 Touren (getestet mit Martin-Dale-Abrieb mit Schleifpapier Körnung 400)
• eine Wasserdampfdurchlässigkeit mit einer Dampfdiffusionswiderstandszahl von µ ≤ 10 (sehr gut wasserdampfdurchlässig) bis zu Dampfsperren mit einer Dampfdiffusionswiderstandszahl größer 15000
• elektrostatischen Eigenschaften einstellbar von antistatischen Eigenschaften mit einem Oberflächenwiderstand im Bereich 10² bis 10E9 Ohm, bzw. mit isolierenden Eigenschaften mit einem Oberflächenwiderstand im Bereich 10E9 bis 10E12 Ohm.

10. Textilsubstrat nach einem der Ansprüche 1 bis 9, **dadurch gekennzeichnet, dass** über die Art des Schmelzklebstoffs und die Dicke der Beschichtung eine Barrierefunktion des Textilsubstrats gegenüber Wasserdampf einstellbar ist.

11. Textilsubstrat nach einem der Ansprüche 1 bis 10,
**dadurch gekennzeichnet, dass** der Schmelzklebstoff zur Dekorierung als strukturierte Schicht, insbesondere in Form von Streifen, aufgetragen ist.

12. Textilsubstrat nach einem der Ansprüche 1 bis 11,
**dadurch gekennzeichnet, dass** das Textilsubstrat einen Farbanstrich aufweist, wobei im Vergleich zu einer handelsüblichen, mit einer Stärke-Kunststoff-Appretur beschichteten Glastapete, bzw. einem handelsüblich rohweißen Malervlies, beim Farbanstrich 20 bis 80 % weniger, insbesondere 40 bis 60 % weniger Farbe für einen deckenden Anstrich benötigt wird.

13. Textilsubstrat nach einem der Ansprüche 1 bis 12,
**dadurch gekennzeichnet, dass** auf der Rückseite des textilen, flächigen Substrats auf der Rückseite weitere funktionale Elemente ausgewählt aus der Gruppe bestehend aus Akustikvlies, Schaumstoff, Wärmedämmmsystem, Wärmespeichersystem, wasserabsorbierendes System, Flächenheizung, Ausgleichsschicht, IR-reflektierende Schicht, Geruchsabsorbierende Schicht, paramagnetisches System oder Kombinationen hiervon angeordnet sind.

14. Verfahren zur Herstellung eines flächigen Textilsubstrats mit einer Schmelzklebstoffschicht nach einem der vorhergehenden Ansprüche mit folgenden Schritten:
a) mindestens ein reaktiver Schmelzklebstoff wird mittels einer Schlitzdüse auf mindestens einer Oberfläche des Textilsubstrats aufgetragen und
b) das Textilsubstrat über eine anti-haft beschichtete Walze zur Entfernung von Luftblasen aus dem Verbund aus Textilsubstrat und Schmelzklebstoff geführt wird.

15. Verfahren nach Anspruch 14,
**dadurch gekennzeichnet, dass** nach Schritt b) mittels eines Kalanders eine Druckbeaufschlagung zur Verbesserung der Haftung zwischen Textilsubstrat und Schmelzklebstoffschicht erfolgt.

16. Verfahren nach einem der Ansprüche 14 oder 15, **dadurch gekennzeichnet, dass** die Textilsubstratbahn mit einer Geschwindigkeit im Bereich von 1 bis 500 m/min, insbesondere von 10 bis 100 m/min transportiert wird.

17. Verwendung des flächigen Textilsubstrats nach einem der Ansprüche 1 bis 13 in Form einer Tapete, für dekorative Wand- und Deckenbeläge, für armierende Wand- Dach-, Decken- und Bodenbeläge im Innen- und Aussenbereich, für dekorative Wand- und Deckenverkleidungen, für dekorative Tür- und Möbelverkleidungen, wobei diese einen Farbanstrich aufweisen oder frei von einem Farbanstrich sind.
